Europäisches Patentamt

**European Patent Office**

Office européen des brevets

(11) Numéro de publication: **0 245 125 B1**

# (12) FASCICULE DE BREVET EUROPEEN

(45) Date de publication de fascicule du brevet:
31.07.91

(51) Int. Cl.5: **B29C 47/90**, B29C 71/00,
B29C 59/08

(21) Numéro de dépôt: 87400666.1

(22) Date de dépôt: 25.03.87

(54) **Procédé de fabrication de tubes en polyamide présentant une résistance au choc à froid et à la traction améliorée.**

(30) Priorité: 04.04.86 FR 8604880

(43) Date de publication de la demande:
11.11.87 Bulletin 87/46

(45) Mention de la délivrance du brevet:
31.07.91 Bulletin 91/31

(84) Etats contractants désignés:
**AT BE DE ES FR GB IT NL SE**

(56) Documents cités:
EP-A- 0 147 779
DE-A- 3 216 720
DE-B- 2 205 179
US-A- 2 632 921

KUNSTSTOFFE, vol. 65, no. 6, juin 1975, pages 311-316, Carl Hanser Verlag, Munich, DE; H. DRAGAUN et al.: "Zur Technologie und Morphologie von Polypropylen-Druckrohren"

AUSTRALIAN ABSTRACTS, 21 juillet 1966; & AU-A-54 084 65 (IMPERIAL METAL INDUSTRIES (KYNOCH) LTD) 19-01-1965

(73) Titulaire: **ATOCHEM**
**4 & 8, Cours Michelet La Défense 10**
**F-92800 Puteaux(FR)**

(72) Inventeur: **Labaig, Jean-Jacques**
**Chemin du Pommier Rue de Bretagne**
**F-27300 Bernay(FR)**
Inventeur: **Fenie, Michel**
**21, Avenue du Président Kennedy Les Logis**
**F-27300 Bernay(FR)**
Inventeur: **Glotin, Michel**
**Parc Maubuisson**
**F-27470 Serquigny(FR)**

(74) Mandataire: **Foiret, Claude et al**
**ATOCHEM Département Propriété Industrielle**
**F-92091 Paris la Défense 10 Cédex 42(FR)**

Rank Xerox (UK) Business Services

## Description

Le domaine de la présente invention est celui des tubes extrudés en polyamides, qui ont depuis longtemps reçu de nombreuses applications.

L'une de celles-ci est la réalisation de canalisations de distribution d'air comprimé fixes ou mobiles, ces dernières constituant par exemple une partie du réseau de freinage de véhicules routiers tels que camions, dans lesquels la flexibilité et la possibilité de mise en forme des matières plastiques semi-cristallines sont particulièrement appréciées. Parmi les polyamides, le polyamide-11 est préféré.

Dans le cadre de l'optimisation des conditions de fabrication de ces tubes par extrusion, et en particulier pour améliorer les propriétés mécaniques des tubes, on a été amené à mettre en évidence l'orientation moléculaire qui se produit à la surface des tubes par suite du frottement du tube encore plastique contre la surface du conformateur.

A l'échelle macroscopique des blessures de la "peau" des tubes, telles qu'écorchures, rayures etc. peuvent être la cause de valeurs anormalement basses du pourcentage de casses lors des essais de résistance au choc à froid pratiqués sur des échantillons de tubes.

A l'échelle microscopique, on a mis en évidence par des mesures de biréfringence effectuées sur des coupes fines par des plans voisins de l'axe des tubes, une orientation parallèle à cet axe d'épaisseur comprise entre 20 et 200 et plus précisément entre 50 et 100 microns. On a pu remarquer en outre que le maximum d'orientation, correspondant au maximum de biréfringence, ne se situait pas à la surface du tube, mais à une profondeur d'une vingtaine de microns de la surface, mesurée en direction de l'axe du tube. Ce que nous appellerons la morphologie cristalline du tube est caractérisé par l'épaisseur de la peau orientée et son niveau d'orientation en valeur absolue.

On a pensé en suivant une théorie exposée par Dragaun, Hubeny et Muschik dans Journal of Polymer Science, vol. 15, pages 1779 à 1789 (1977) que le maximum d'orientation correspond vraisemblablement à un point d'inflexion du profil de vitesse établi à une distance variable de la paroi du tube ou à un maximum de la vitesse de cisaillement en ces mêmes points de mesure, lorsque le tube rentre dans le conformateur.

L'invention concerne un procédé de fabrication de tube extrudés en polyamide, procédé comprenant un traitement thermique approprié effectué sur la ligne d'extrusion, en aval des bacs de conformation et comportant la fusion totale de la zone orientée de surface sur une épaisseur pouvant aller de 20 à 200 microns et de préférence de 50 à 100 microns suivie d'une recristallisation contrôlée obtenue par trempe à l'eau, permettant de reconstituer à la surface extérieure du tube une morphologie cristalline identique à ce qu'elle est en profondeur, en dessous du niveau le plus bas de la zone orientée de surface.

Les figures jointes permettront de mieux comprendre l'invention. Ce sont :
- La figure 1 représentant une vue en élévation d'une ligne d'extrusion selon l'invention.
- La figure 2 représentant une vue de face du poste de flammage 5 de la figure 1.
- La figure 3 représentant une variante de l'invention, un four à quartz 15 remplaçant le poste de flammage 5.
- La figure 4 est un faisceau de courbes montrant le gain apporté par l'invention.

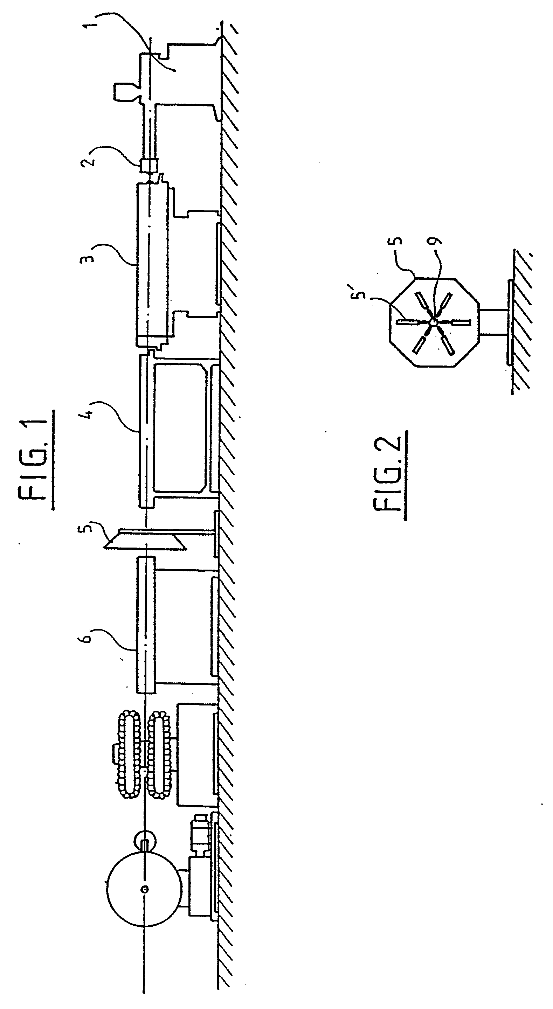

Sur la figure 1 on peut voir une extrudeuse 1 munie d'une tête d'extrusion à tube 2.

En 3 est visible un bac conformateur de type conventionnel. Il peut être du type à calibrage sous vide, qui permet d'atteindre une excellente précision de cotes, mais entraîne l'inconvénient d'orienter la matière plastique en surface et éventuellement de la rayer, du fait du frottement considérable entre le tube et la paroi du calibre sous vide.

C'est pourquoi on a eu l'idée de combiner la précision de cotes obtenue par conformation dans, par exemple, un bac à vide, avec une refusion de la couche extérieure du tube orientée par frottement à la surface du calibre. La précision des cotes est maintenue par les couches internes non refondues du tube qui conservent leur cohésion pendant le traitement thermique selon l'invention.

On comprendra aisément ce point capital si l'on considère que pour des dimensions courantes pour un tube de polyamide 11 de : diamètre extérieur 12 mm, diamètre intérieur 9 mm, la refusion n'intéresse que 60 microns environ sur une épaisseur de 1,5 mm soit 4 % de l'épaisseur.

Aussi le traitement thermique est'il contrôlé avec une grande précision.

Un bac de refroidissement complémentaire 4 permet un ajustement des températures en amont du poste de traitement thermique.

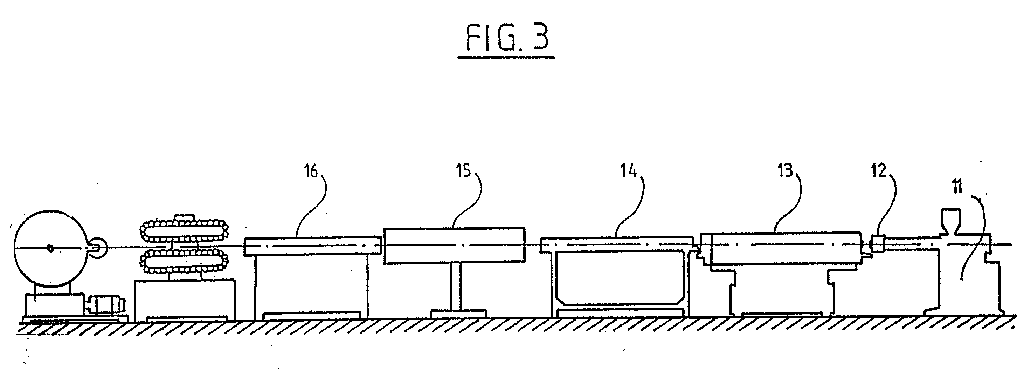

On voit en 5 sur les figures 1 et 2 le poste de flammage selon la première variante, qui comporte six brûleurs BUNSEN 5' disposés symétriquement sur une couronne centrée sur le tube extrudé 9 (figure 2).

Le centrage des six brûleurs peut se régler très précisément grâce à un montage non représenté sur glissières munies de vis micrométriques et vis de calage. La pression de gaz admise dans ces brûleurs est également réglable par détendeurs de sorte que, dans le cas de l'extrusion de tube en polyamide 11, une

EP 0 245 125 B1

température de l'ordre de 220°C puisse être atteinte à la surface du tube extrudé.

Dans la variante représentée sur la figure 3, des éléments correspondants 11, 12, 13 et 14 remplacent les éléments 1, 2, 3 et 4.

En 15, un four à quartz peut être substitué au poste de flammage à gaz 5.

On a effectué grâce à ce four à quartz des essais de balayage par des courants d'air ou d'azote. On a ainsi mis en évidence que les variations des propriétés mécaniques des tubes n'étaient pas dues à un éventuel effet d'oxydation mais bien à l'effet du traitement thermique.

En aval du poste de flammage 5 (ou du four à quartz 15) s'effectue la trempe dans un bac de refroidissement à l'eau 6 ou 16. Ce bac a une longueur de 0,50 m et est parcouru par de l'eau à 23°C.

Le refroidissement à l'air par anneau de soufflage alimenté par ventilateur a été également expérimenté avec succès, comme illustré dans les exemples ci-après.

On considère que le traitement thermique est "contrôlé" lorsque la fusion de la zone orientée de surface est complète et lorsque la recristallisation naturelle a remplacé aprés trempe à l'eau ladite zone orientée de surface.

Ce phénomène est établi par microphotographie en lumière polarisée. La zone orientée de surface est caractérisée par des raies parallèles à l'axe du tube, la zone profonde cristallisée se distinguant par des raies obliques.

Après traitement thermique et recristallisation, l'ensemble de l'épaisseur du tube est caractérisé par des raies obliques.

EXEMPLE 1

- Polyamide 11 plastifié de référence commerciale noir
BESNO P40 TL
- Tube de dimensions 9 x 12 mm

| | Témoin | Traitement thermique Four à quartz et trempe à l'eau | Traitement thermique Four à quartz et refroidissement à l'air |
|---|---|---|---|
| Contrainte à la rupture (bars) | 320 | 470 | 470 |
| Allongement à la rupture (%) | 253 | 442 | 443 |
| Casse au choc à froid (%) — 25°C — 40°C — 60°C | 0 6 57 | 0 1,2 3 | 0 5 22 |
| Biréfringence $\Delta n \times 10^3$ | 23 | 4 | 4 |

EXEMPLE 2

- Polyamide 12 plastifié - référence commerciale noir
AESNO P40 TL

3

- Tube de dimensions 9 x 12 mm

| | Témoin | Traitement thermique Four à quartz et trempe à l'eau | Traitement thermique Four à quartz et refroidissement à l'air |
|---|---|---|---|
| Contrainte à la rupture (bars) | 295 | 440 | 390 |
| Allongement à la rupture (%) | 268 | 480 | 425 |
| Casse au choc à froid (% d'éprouvette)<br>– 25°C<br>– 30°C | 5<br>40 | 0<br>12,5 | 4,5<br>30 |
| Biréfringence $\Delta n \times 10^3$ | 25 | 3 | 3 |

On peut constater l'amélioration très significative des propriétés mécaniques des tubes en traction (augmentation simultanée des valeurs de la contrainte à la rupture et de l'allongement à la rupture).

Les essais de choc masse tombante sont effectués selon un test dérivé de la norme NFR12 632 ou ISO/DIS/7628/2.

Les tubes sont introduits dans un appareil de type guillotine dans lequel tombe d'une hauteur de 0,70 m, une masse de 8 kg de forme cylindrique, de courbure opposée à celle du tube et orthogonal à celui-ci. Il n'y a pas de butées limitant la course de la masse lors de l'écrasement du tube.

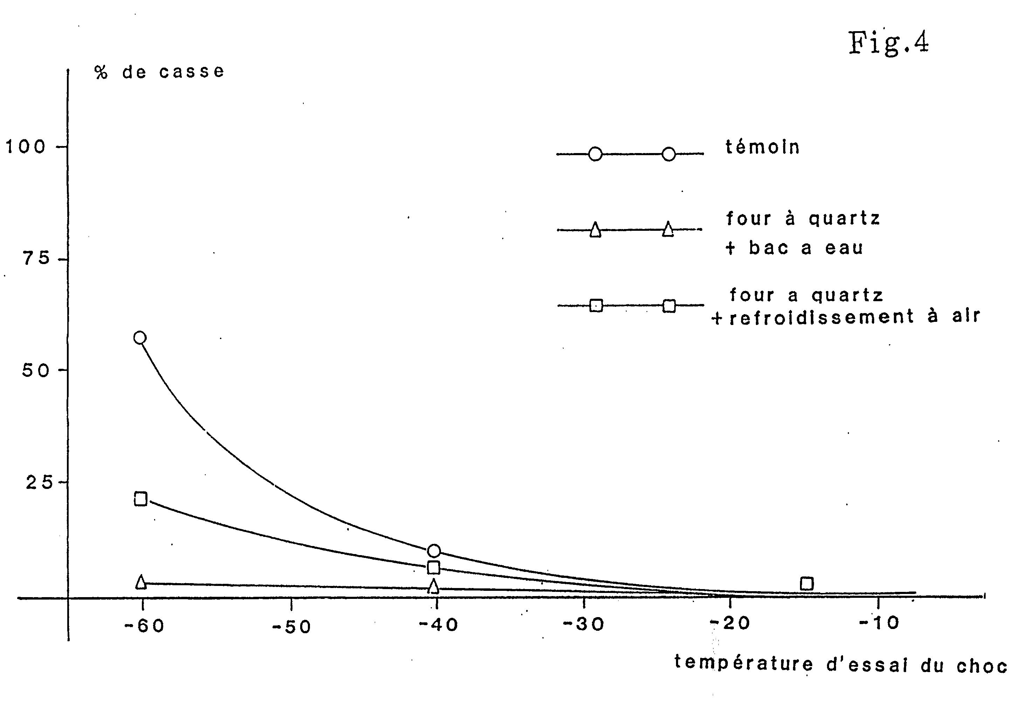

Les variations du pourcentage de casse des éprouvettes de l'exemple 1 sont représentées par la figure 4.

Le gain apporté par le traitement thermique contrôlé comportant les deux phases de fusion et de trempe à l'eau est clairement démontré. Le gain apporté par une recristallisation après refroidissement à l'air est significativement moins important.

## Revendications

1. Procédé de traitement de tube de polyamide obtenu par extrusion permettant d'améliorer ses propriétés mécaniques consistant, après extrusion du tube et en aval des bacs de conformation, en vue d'éliminer la zone orientée de surface, à fondre la totalité de la zone orientée de surface sur une épaisseur de 50 à 100 microns et à recristalliser ladite surface par trempe à l'eau.

2. Procédé selon la revendication 1 consistant à fondre la zone orientée au moyen d'un poste de flammage à gaz muni de brûleurs caractérisé en ce que lesdits brûleurs sont disposés symétriquement en couronne autour du tube.

3. Procédé selon la revendication 1 caractérisé en ce que la fusion de la zone orientée est effectuée dans un four à quartz.

## Claims

1. Process for the treatment of polyamide pipe obtained by extrusion enabling its mechanical properties to be improved, consisting, after extrusion of the pipe and downstream of the forming troughs, in melting the whole of the oriented surface region over a thickness of 50 to 100 microns, with a view to removing the oriented surface region, and in recrystallising the said surface by quenching with water.

2. Process according to Claim 1, consisting in melting the oriented region by means of a gas flaming station provided with burners, characterised in that the said burners are arranged symmetrically as a ring around the pipe.

3. Process according to Claim 1, characterised in that the melting of the oriented region is performed in a quartz furnace.

**Patentansprüche**

1. Verfahren zur Behandlung eines Polyamidschlauchs, der erhalten worden ist durch Extrusion zur Verbesserung seiner mechanischen Eigenschaften, das darin besteht, daß man nach der Extrusion des Schlauches und nach der Formgebung, um den orientierten Oberflächenbereich auszuschalten, den gesamten orientierten Oberflächenbereich auf eine Dicke von 50 bis 100 $\mu$m schmilzt und diesen Oberflächenbereich durch Eintauchen in Wasser wieder kristallisiert.

2. Verfahren nach Anspruch 1, wobei man den orientierten Bereich schmilzt mit Hilfe eines Gasbrenners, der mit Brenndüsen versehen ist, dadurch gekennzeichnet, daß die Brenndüsen symmetrisch kranzförmig um den Schlauch herum angeordnet sind.

3. Verfahren nach Anspruch 1, dadurch gekennzeichnet, daß man den orientierten Bereich in einem Quarzofen schmilzt.

FIG. 1

FIG. 2

EP 0 245 125 B1

# FIG. 3

16    15    14    13    12    11

EP 0 245 125 B1

Fig.4

% de casse

- témoin
- four à quartz + bac a eau
- four a quartz + refroidissement à air

température d'essai du choc

EP 0 245 125 B1